# EUROPÄISCHE PATENTSCHRIFT

(11) **EP 0 751 057 B1**
(45) Veröffentlichungstag und Bekanntmachung des Hinweises auf die Patenterteilung: **26.05.1999**
(21) Anmeldenummer: 96109748.2
(22) Anmeldetag: 18.06.1996
(51) Int. Cl.: B62B 3/18

(54) **Stapelbarer Einkaufswagen**
Nestable shopping trolley
Chariot d'achat emboîtable

(30) Priorität: 27.06.1995 DE 29510349 U; 27.06.1995 DE 29510350 U
(43) Veröffentlichungstag der Anmeldung: 02.01.1997
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- EP-A- 0 141 398
- EP-A- 0 609 663
- EP-A- 0 620 146
- EP-B- 0 254 210

## Beschreibung

Die Erfindung betrifft einen stapelbaren Einkaufswagen, mit einem Fahrgestell, das einen Korb trägt, dessen nach vorne schräg abfallende Rückwand in das Korbinnere verschwenkbar ist, mit einer Schiebeeinrichtung und mit einer von der Rückseite des Einkaufswagens aus bedienbaren Abstelleinrichtung für größere Gegenstände, wobei die am Fahrgestell befestigte Abstelleinrichtung eine zum Aufsetzen der Gegenstände vorgesehene, ortsfest angeordnete Abstellzone und einen zum rückwärtigen Abstützen der Gegenstände bestimmten Anschlag aufweist, der um eine horizontale Achse verschwenkbar so gelagert und angeordnet ist, daß er aus der Gebrauchslage in eine Nichtgebrauchslage und umgekehrt bewegbar ist und in Nichtgebrauchslage mit außen liegenden, in einem Abstand zur horizontalen Achse angeordneten Stützbereichen an den Längsseiten des Fahrgestelles abgestützt ist.

Die europäische Patentschrift 0 254 210 A1 beschreibt einen stapelbaren Einkaufswagen, dessen im hinteren Bereich angeordnete Abstelleinrichtung ein um eine horizontale Achse begrenzt schwenkbar gelagertes Schwenkteil aufweist, das in Gebrauchslage von einem ortsfest angeordneten Halteteil hintergriffen wird und so die Abstelleinrichtung in ihrer Gebrauchslage festlegt. Das Schwenkteil und das Halteteil bilden eine gemeinsame Auflagefläche für auf der Abstelleinrichtung abgestellte größere Güter, z.B. für Getränkekästen. Der größte Teil der Auflagefläche wird durch das Schwenkteil gebildet, während der restliche kleinere Teil durch das Halteteil gestellt wird. Letzteres rührt daher, daß das Halteteil relativ schmal ausgebildet ist, um in der Mitte der Auflagefläche des Schwenkteiles keine zu große Öffnung entstehen zu lassen. Durch das schmale Halteteil ergibt sich ein Nachteil, der darin besteht, daß das Schwenkteil verwindungsanfällig wird. Diese Anfälligkeit ist weniger beim Beladen der Abstelleinrichtung zu befürchten als vielmehr beim mißbräuchlichen Umgang mit der Abstelleinrichtung selbst. Es ist bekannt, daß sich Jugendliche gerne auf die in Gebrauchslage befindliche Abstelleinrichtung stellen. Tritt man dabei mit dem Fuß auf eine der beiden äußeren oberen Ecken des Schwenkteiles, läßt sich dieses relativ leicht verbiegen, so daß die Abstelleinrichtung ihre Funktion, ein sicheres Befördern großvolumiger Gegenstände zu garantieren, verliert.

Durch die DE 43 12 392 A1 ist ein Einkaufswagen bekannt, dessen Abstelleinrichtung ein starres freitragendes Stützteil umfaßt, das einen nach hinten sich erstreckenden Abstellflächenabschnitt aufweist, an dem ein um eine horizontale Achse verschwenkbares Schwenkteil angelenkt ist. In Gebrauchslage der Abstelleinrichtung verlängert das Schwenkteil die Fläche des Abstellflächenabschnittes und bildet ferner einen rückwärtigen Anschlag für einen auf der Abstelleinrichtung befindlichen Gegenstand. Es lassen sich bei diesem Einkaufswagen zwei Nachteile erkennen. So ist es bei der Abstelleinrichtung aus Stabilitätsgründen erforderlich, das nach hinten frei auskragende Stützteil sehr massiv auszubilden und dieses an mehreren Stellen am Fahrgestell zu verschweißen, um eine ausreichende Stabilität der Abstelleinrichtung auch dann zu garantieren, wenn sich jemand auf die Abstelleinrichtung stellt. Gleiches gilt auch für das Schwenkteil, das sich lediglich am Stützteil abstützt und durch seine abgewinkelte Form einen großen Hebelarm bildet, der, sollte sich jemand auf das ausgeklappte Schwenkteil stellen, große Kräfte in den Lager- und in den Abstützstellen entstehen läßt. Dies führt zu Beschädigungen an der Abstelleinrichtung.
Die europäische Patentschrift 0 609 663 A1 beschreibt einen Einkaufswagen, der in seinem hinteren Bereich eine zum Abstellen größerer Gegenstände bestimmte Abstelleinrichtung aufweist, die zwei feststehende, in Längsrichtung versetzt angeordnete Halteelemente umfaßt. Von diesen Halteelementen ist das in Schieberichtung des Einkaufswagens vordere Halteelement als Abstellzone für den Boden eines größeren Gegenstandes und das hintere gekröpfte Halteelement als Anschlag für die beiden seitlichen Wände und für die hintere Wand des größeren Gegenstandes ausgebildet, der schräg nach hinten geneigt von oben her in die Abstelleinrichtung einsetzbar ist und eine schräg nach hinten geneigte Stellung einnimmt. Bei diesem Einkaufswagen fällt auf, daß die in das Korbinnere verschwenkbare Rückwand des Korbes, im Gegensatz zu solchen bekannter Einkaufswagen mit etwa 48° gegenüber einer Waagerechten relativ flach nach vorne abfallend angeordnet ist. Diese Anordnung ist notwendig, uni die zum Schieben des Einkaufswagens notwendige Beinfreiheit zu erhalten, da der Anschlag der Abstelleinrichtung ein Stück weit nach hinten hinausragt. Dieser Einkaufswagen besitzt zwei entscheidende Nachteile. Ein erster Nachteil besteht darin, daß ein größerer Gegenstand, beispielsweise eine Getränkekiste, nur in ergonomisch ungünstiger Weise auf der Abstelleinrichtung abgestellt oder von dieser wieder abgehoben werden kann. Insbesondere etwas kleinere Personen können sich dabei an der als Handgriff gestalteten, etwa 107 cm über dem Fußboden angeordneten Schiebeeinrichtung den Kopf dann anschlagen, wenn sie zum Abstellen der Getränkekiste notwendigerweise eine gebückte Haltung einnehmen müssen. Der zweite entscheidende Nachteil resultiert aus der an sich ungewöhnlichen Schrägstellung der Rückwand des Korbes, durch die kaum eine ebene Abstellfläche auf dem Korbboden übrig bleibt, um z.B. Flaschen im Korb, annähernd aufrecht stehend, sicher abstellen zu können. Bedingt durch die starke Schrägstellung der Rückwand und auch durch den überwiegend gebogenen, zum unteren Ende der Rückwand abfallenden Boden haben somit sämtliche im Korb befindlichen Gegenstände das Bestreben, sich ausschließlich in die kleine verbliebene ebene Abstellfläche am Korbboden zu bewegen. Dies führt zwangsläufig zu Beschädigungen leicht zerbrechlicher Ware.

Ausgehend von diesem Stand der Technik besteht die Aufgabe der Erfindung darin, die Abstelleinrichtung eines gattungsgemäßen Einkaufswagens so weiterzuentwickeln, daß unter Beibehaltung der zum Schieben des Einkaufswagens erforderlichen Beinfreiheit die Rückwand des Korbes steiler gestellt werden kann, um die am Korbboden befindliche ebene Abstellfläche vergrößern zu können. Außerdem soll die Abstelleinrichtung so gestaltet werden, daß selbst bei mißbräuchlicher Belastung des Stützteiles oder des Schwenkteiles keine Beschädigungen an der Abstelleinrichtung zu befürchten sind.

Die Lösung der Aufgabe besteht darin, daß der Anschlag in Gebrauchslage mit seinen Stützbereichen an den Längsseiten des Fahrgestelles aufliegt.

Würde man bei dem zuletzt genannten, zum Stand der Technik zählenden Einkaufswagen die Rückwand des Korbes steiler stellen, müßte der starr angeordnete Anschlag weiter nach hinten versetzt werden, um die durch die Formatgrößen der Getränkekiste vorgegebene Mindestlichtweite der Abstelleinrichtung beibehalten zu können. Darunter würde aber wieder die zum Schieben des Einkaufswagens erforderliche Beinfreiheit leiden, es sei denn, man versetzte die Schiebeeinrichtung ebenfalls weiter nach hinten. Dies würde jedoch wiederum die Zugänglichkeit zur Abstelleinrichtung negativ beeinflussen.
Durch die erfindungsgemäße Lösung entfallen solche konstruktiv ungünstigen Alternativen, denn bei Nichtgebrauch der Abstelleinrichtung bleibt der Anschlag nach vorne geschwenkt, so daß genügend Beinfreiheit vorhanden ist. Nur in Gebrauchslage der Abstelleinrichtung wird der Anschlag nach hinten geschwenkt, um den Platz auf der Abstelleinrichtung freizugeben. Durch die steilere Anordnung der Rückwand des Korbes vergrößert sich die ebene Abstellfläche am Korbboden. Die Ware kann wieder in bewährter Weise abgestellt werden, ohne sich gegenseitig zu behindern. Beim Ineinanderschieben mehrerer stapelbarer Einkaufswagen drücken die vorderen Abschnitte der nach oben gekrümmten Längsholme des Fahrgestelles einen in die Gebrauchslage geschwenkten Anschlag eines vorausbefindlichen Einkaufswagens automatisch in die Nichtgebrauchslage. Lediglich zum Gebrauch der Abstelleinrichtung muß der Anschlag nach rückwärts geschwenkt werden. Der Schwenkbereich des Anschlages beträgt dabei bevorzugt mehr als 90°. Die erfindungsgemäße Lösung besticht durch ihre Einfachheit und vor allem durch ihre Robustheit, da sich der in Gebrauchslage befindliche Anschlag nicht nur in den beiden Lagern sondern auch mit seinen äußeren Begrenzungen am Fahrgestell abstützt. Der nicht frei auskragende Anschlag ist somit in äußerst zweckmäßiger Weise an vier Auflagestellen abgestützt.

Die Erfindung wird anhand von Ausführungsbeispielen näher erläutert. Es zeigt
- Fig. 1: einen Einkaufswagen, dessen Abstelleinrichtung sich in Gebrauchslage befindet;
- Fig. 2: den gleichen Einkaufswagen in Seitenansicht;
- Fig. 3: die Fahrgestelle dreier Einkaufswagen, um das Einklappen der Anschläge zu zeigen.

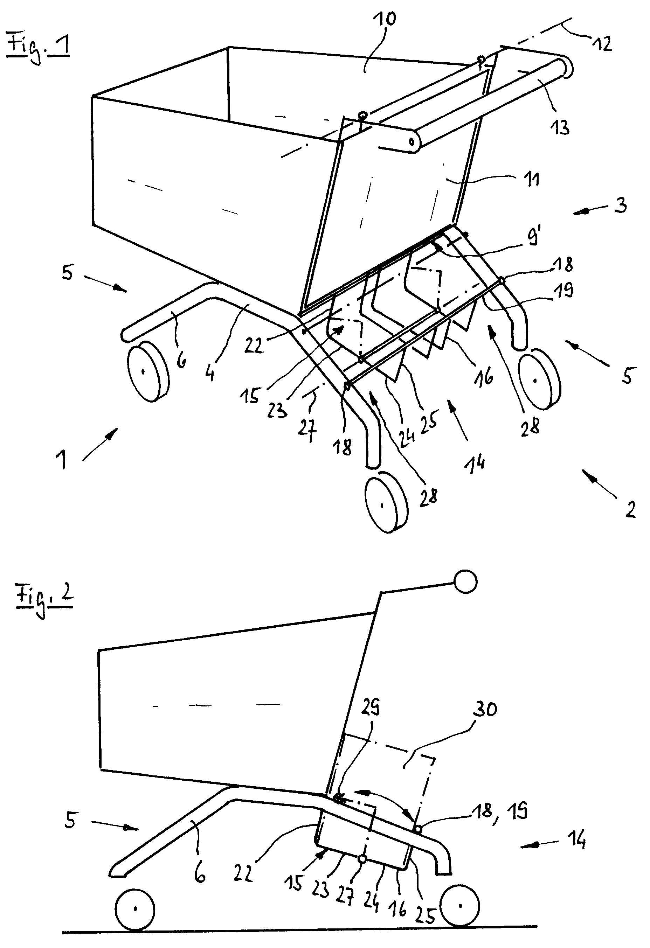

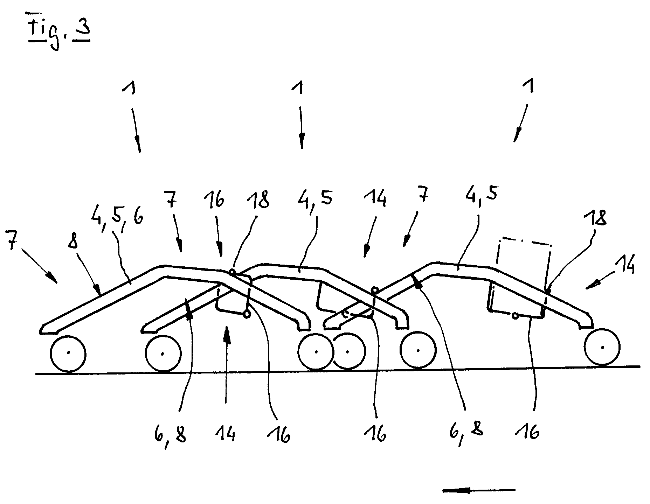

Der in Fig. 1 und 2 dargestellte Einkaufswagen 1 weist ein Fahrgestell 4 auf, das ein Behältnis in Form eines Korbes 10 trägt. Die Rückwand 11 des Korbes 10 ist in bekannter Weise um eine oben liegende horizontale Achse 12 in das Korbinnere verschwenkbar. Der Einkaufswagen 1 ist mit einer Schiebeeinrichtung 13 ausgestattet, die bevorzugt an der Rückseite des Korbes 10 vorgesehen ist. Ebenfalls an der Rückseite 2 des Einkaufswagens 1 angeordnet befindet sich im Bereich 3 unterhalb der Rückwand 11 eine zum Abstellen größerer Gegenstände 30 (vgl. Fig. 2) bestimmte Abstelleinrichtung 14. Die Abstelleinrichtung 14 weist eine als Stützteil gestaltete Abstellzone 15 und einen zum weiteren Abstützen der Gegenstände 30 bestimmten Anschlag 16 auf, der vor allem eine rückwärtige Begrenzung für die Gegenstände 30 bildet und ein Herabfallen der Gegenstände 30 von der Abstelleinrichtung 14 verhindert. Die Abstellzone 15 ist als freitragendes Bauteil gestaltet, das an wenigstens einer die Längsseiten 5 des Fahrgestelles 4 verbindenden Querstrebe 9' angeschweißt oder befestigt ist. Die Abstellzone 15 ist bevorzugt so abgewinkelt gestaltet, daß ein erster Abschnitt 22, ausgehend von der Querstrebe 9' nach unten führt, an den sich ein zweiter, entgegengesetzt zur Schieberichtung des Einkaufswagens 1 leicht nach hinten abfallender zweiter Abschnitt 23 anschließt. Am zweiten Abschnitt 23 ist ein um eine horizontale Achse 27 verschwenkbar gelagerter Anschlag 16 angelenkt, der aus einer Nichtgebrauchslage (strichpunktiert gezeichnet) in eine Gebrauchslage und umgekehrt bewegt werden kann. Der Anschlag 16 ist bevorzugt als ebenfalls abgewinkeltes Teil gestaltet, das einen die Abstellfläche der Abstelleinrichtung 14 vergrößernden ersten Abschnitt 24 aufweist, der parallel zum zweiten Abschnitt 23 der Abstellzone 15 verläuft. An den ersten Abschnitt 24 schließt bevorzugt im rechten Winkel nach oben abgebogen ein zweiter Abschnitt 25 an, der an seinem oberen Ende einen quer zur Schieberichtung des Einkaufswagens 1 sich erstreckenden Abschnitt 19 aufweist, der sich sowohl in Gebrauchs- als auch in Nichtgebrauchslage mit seinen beiden außen liegenden, entgegengesetzt angeordneten Stützbereichen 18 an den Längsseiten 5 des Fahrgestelles 4 abstützt. Im Beispiel sind dies die Holme 6 des Fahrgestelles 4. Der Abschnitt 19 bildet einen rückwärtigen Anschlagbereich für auf der Abstelleinrichtung 14 befindliche Gegenstände 30. Zwischen der Abstelleinrichtung 14 und den Längsseiten 5 des Fahrgestelles 4 ist je ein Zwischenraum 28 gebildet. Die Zwischenräume 28 sind erforderlich, um Platz für einen Teil der Längsseiten 5 des Fahrgestelles 4 eines weiteren Einkaufswagens 1 zu schaffen, der in bekannter Weise in einen vorausbefindlichen Einkaufswagen 1 eingeschoben werden soll. In den Zeichnungen sind die Gebrauchs- und die Nichtgebrauchslage des Anschlages 16 eingezeichnet. Je nach Gestaltung des Fahrgestelles 4 kann es zweckmäßig sein, an der Oberseite der Holme 6 und nahe des Bodens des Korbes 10 zwei Halteelemente 29, etwa in Form von Klammern anzubringen, in welche die beiden Stützbereiche 18 des Anschlages 16 einrasten und den Anschlag 16 in Nichtgebrauchslage sicher halten. Die Längsseiten 5 des Fahrgestelles 4 können in bekannter Weise sehr unterschiedlich gestaltet sein. Ein- oder mehrstückige und zumindest teilweise nach oben gekrümmte oder gerichtete Holme 6, die gewöhnlich durch wenigstens zwei Querstücke verbunden sind, sind ebenso möglich, wie die ebenfalls bewährten, aus Draht gefertigten Fahrgestelle 4, bei denen die die Abstelleinrichtung 14 begrenzenden, einen Teil der Längsseiten 5 des Fahrgestelles 4 bildenden Stäbe aus Draht gefertigt sind.

In Fig. 3 sind der Einfachheit halber nur die Fahrgestelle 4 erfindungsgemäßer Einkaufswagen 1 mit daran angeordneten Abstelleinrichtungen 14 dargestellt. Die Zeichnung zeigt, wie ausgeklappte, also in Gebrauchslage befindliche Anschläge 16 beim Ineinanderschieben der in bekannter Weise stapelbar gestalteten Einkaufswagen 1 in die Nichtgebrauchslage bewegt werden. Die Längsseiten 5 der Fahrgestelle 4 sind dafür in zweckmäßiger und bekannter Weise aus Holmen 6 gebildet, die in ihrem vorderen Bereich 7 nach vorne abfallende Schrägflächen 8 aufweisen, welche die Anschläge 16 beim Ineinanderschiebevorgang der Einkaufswagen 1 unterfahren, anheben und in die Nichtgebrauchslage klappen lassen. Dieser Ablauf läßt sich in der Zeichnung leicht verfolgen. Der rechts dargestellte Einkaufswagen 1 wird gerade in einen Stapel Einkaufswagen 1 geschoben, wobei sich der Anschlag 16 beim vorausbefindlichen Einkaufswagen 1 in Gebrauchslage befindet. Der Pfeil zeigt die Einfahrrichtung des hinteren Einkaufswagens 1 an. Die vorderen Holme 6 dieses Einkaufswagens 1 sind eben dabei, den Abschnitt 19 des Anschlages 16 des vorausbefindlichen, in der Zeichnung mittleren Einkaufswagens 1 zu unterfahren und anzuheben. Der in der Mitte befindliche Einkaufswagen 1 wiederum ist bereits so weit in den weiteren vorausbefindlichen Einkaufswagen 1 eingeschoben, daß sich dessen Anschlag 16 bereits in der Nichtgebrauchslage befindet und mit seinen beiden Stützbereichen 18 am Fahrgestell aufliegt. Beim rechts dargestellten Einkaufswagen 1 liegt, wie bereits erwähnt, der in Gebrauchslage befindliche Anschlag 16 ebenfalls mit seinen Stützbereichen 18 am Fahrgestell 4 auf.

Das Abstützen des Anschlages 16 am Fahrgestell 4 muß nicht direkt an den die Längsseiten 5 des Fahrgestelles 4 bildenden Holmen oder Stäben erfolgen. Andere geeignete, am Fahrgestell 4 angebrachte Stützelemente, insbesondere solche aus elastischem Kunststoff, können am Fahrgestell 4 an geeigneten Stellen vorgesehen sein. Der Schwenkbereich des Anschlages liegt gewöhnlich zwischen 90° und 180°.

## Patentansprüche

1. Stapelbarer Einkaufswagen (1), mit einem Fahrgestell (4), das einen Korb (10) trägt, dessen nach vorne schräg abfallende Rückwand (11) in das Korbinnere verschwenkbar ist, mit einer Schiebeeinrichtung (13) und mit einer von der Rückseite (2) des Einkaufswagens (1) aus bedienbaren Abstelleinrichtung (14) für größere Gegenstände (30), wobei die am Fahrgestell (4) befestigte Abstelleinrichtung (14) eine zum Aufsetzen der Gegenstände (30) vorgesehene, ortsfest angeordnete Abstellzone (15) und einen zum rückwärtigen Abstützen der Gegenstände (30) bestimmten Anschlag (16) aufweist, der um eine horizontale Achse (27) verschwenkbar so gelagert und angeordnet ist, daß er aus der Gebrauchslage in eine Nichtgebrauchslage und umgekehrt bewegbar ist und in Nichtgebrauchslage mit außen liegenden, in einem Abstand zur horizontalen Achse (27) angeordneten Stützbereichen (18) an den Längsseiten (5) des Fahrgestelles (4) abgestützt ist, dadurch **gekennzeichnet,** daß der Anschlag (16) in Gebrauchslage mit seinen Stützbereichen (18) an den Längsseiten (5) des Fahrgestelles (4) aufliegt.

2. Stapelbarer Einkaufswagen nach Anspruch 1, dadurch **gekennzeichnet,** daß die Stützbereiche (18) an einem quer zur Schieberichtung des Einkaufswagens (1) sich erstreckenden Abschnitt (19) des Anschlages (16) angeordnet sind.

3. Stapelbarer Einkaufswagen nach Anspruch 1 oder 2, dadurch **gekennzeichnet,** daß zwischen den Längsseiten (5) des Fahrgestelles (4) und der Abstelleinrichtung (14) Zwischenräume (28) gebildet sind, durch die Platz für einen Teile der Längsseiten (5) des Fahrgestelles (4) eines rückwärtigen Einkaufswagens (1) geschaffen ist, der in einen vorausbefindlichen Einkaufswagen (1) eingeschoben werden soll.

4. Stapelbarer Einkaufswagen nach einem der Ansprüche 1 bis 3, dadurch **gekennzeichnet,** daß am Fahrgestell (4) insbesondere aus Kunststoff bestehende Stützelemente vorgesehen sind, die zum Abstützen des Anschlages (16) bestimmt sind.

5. Stapelbarer Einkaufswagen nach einem der Ansprüche 1 bis 4, dadurch **gekennzeichnet,** daß Halteelemente (29) vorgesehen sind, in welche die Stützbereiche (18) des Anschlages (16) in dessen Nichtgebrauchslage einrastbar sind.

## Claims

1. A stackable shopping trolley (1), comprising a wheel frame (4) carrying a basket (10), the rear wall (11) of which is inclined forwards and is pivotable into the interior of the basket, a pushing arrangement (13), and a shelf arrangement (14) for relatively large objects (30) and usable from the rear (2) of the shopping trolley (1), wherein the shelf arrangement (14), fixed to the wheel frame (4), has a fixedly arranged depositing region (15) for receiving the objects (30), and a stop (16) for supporting the objects (30) at the rear and mounted and arranged so as to be pivotable about a horizontal axis (27) in such a manner that it is movable from the position of use into a position of non-use and vice versa and, in the position of non-use, is supported against the longitudinal sides (5) of the wheel frame (4) by means of outer supporting regions (18) arranged at a distance from the horizontal axis (27), characterised in that the supporting regions (18) of the stop (16) rest against the longitudinal sides (5) of the wheel frame (4) in the position of use.

2. A stackable shopping trolley according to claim 1, characterised in that the supporting regions (18) are arranged on a portion (19) of the stop (16) extending transversely to the pushing direction of the shopping trolley (1).

3. A stackable shopping trolley according to claim 1 or 2, characterised in that gaps (28) are formed between the longitudinal sides (5) of the wheel frame (4) and the shelf arrangement (14), thereby providing room for part (9) of the longitudinal sides (5) of the wheel frame (4) of a rear shopping trolley (1) to be pushed into a preceding shopping trolley (1).

4. A stackable shopping trolley according to any one of claims 1 to 3, characterised in that supporting members, in particular of plastics, are provided on the wheel frame (4) for supporting the stop (16).

5. A stackable shopping trolley according to any one of claims 1 to 4, characterised in that retaining members (29) are provided, in which the supporting regions (18) of the stop (16) are engageable in the position of non-use thereof.

## Revendications

1. Chariot à provisions emboîtable (1), avec un châssis (4), qui porte un panier (10) dont la cloison arrière (11), descendante en oblique vers l'avant, peut être pivotée à l'intérieur du panier, avec un dispositif de poussée (13) et avec un dispositif de dépose (14), pouvant être utilisé par le côté arrière (2) du chariot à provisions (1) et destiné à recevoir des objets (30) de plus grande taille, le dispositif de dépose (14), fixé sur le châssis (4), présentant une zone de dépose (15), fixement disposée et prévue pour y poser les objets (30), et une butée (16) destinée au soutien arrière des objets (30), butée qui est montée à pivotement autour d'un axe horizontal (27) et disposée de telle sorte qu'elle peut être déplacée de la position d'utilisation dans une position de non utilisation et vice-versa, et que, dans la position de non utilisation, elle s'appuie contre les côtés longitudinaux (5) du châssis (4) par des régions d'appui (18) situées à l'extérieur, disposées à distance de l'axe horizontal (27), **caractérisé** en ce que la butée (16), en position d'utilisation, repose par ses régions d'appui (18) sur les côtés longitudinaux (5) du châssis (4).

2. Chariot à provisions emboîtable selon la revendication 1, **caractérisé** en ce que les régions d'appui (18) sont disposées sur une partie (19) de la butée (16) qui s'étend transversalement à la direction de poussée du chariot à provisions (1).

3. Chariot à provisions emboîtable selon la revendication 1 ou 2, **caractérisé** en ce que des espaces intermédiaires (28) sont formés entre les côtés longitudinaux (5) du châssis (4) et le dispositif de dépose (14), espaces qui créent de la place pour une partie (9) des côtés longitudinaux (5) du châssis (4) d'un chariot à provisions (1) arrière qui doit être enfilé dans un chariot à provisions (1) se trouvant devant.

4. Chariot à provisions emboîtable selon une des revendications 1 à 3, **caractérisé** en ce que des éléments d'appui, réalisés notamment en matière plastique et destinés à servir d'appuis pour la butée (16), sont prévus sur le châssis (4).

5. Chariot à provisions emboîtable selon une des revendications 1 à 4, **caractérisé** en ce que des éléments de maintien (29) sont prévus, dans lesquels les régions d'appui (18) de la butée (16) peuvent être enclenchées dans la position de non utilisation de cette dernière.
